# EUROPEAN PATENT APPLICATION

(11) **EP 3 373 285 A1**
(43) Date of publication of application: **12.09.2018**
(21) Application number: 18160749.0
(22) Date of filing: 08.03.2018
(51) Int. Cl.: G09G 5/14, G06F 3/0481, G06Q 10/10, G06F 9/451

(54) **DISPLAY APPARATUS AND INFORMATION DISPLAYING METHOD THEREOF**

(30) Priority: 08.03.2017 KR 20170029648
(71) Applicant: Samsung Electronics Co., Ltd., Suwon-si, Gyeonggi-do 16677 (KR)
(72) Inventor: SHIM, Da Hye, 05409 Seoul (KR); LEE, Young Ah, 05510 Seoul (KR); HAN, Sun Young, 16509 Gyeonggi-do (KR); KIM, Dae Wung, 06966 Seoul (KR)
(74) Representative: Taor, Simon Edward William

(57) **Abstract**

A display apparatus may include a communication interface configured to receive, from a first external electronic device, an information list including multiple pieces of information having priority; a display to display the multiple pieces of information; and a processor configured to divide the multiple pieces of information into a first group and a second group based on the priority, display first information included in the first group in a first region of the display, and display second information included in the second group in a second region of the display.

## Description

### PRIORITY

This application claims priority to Korean Patent Application No. 10-2017-0029648, filed March 8, 2017, the content of which is incorporated herein by reference.

### BACKGROUND OF THE INVENTION

### 1. Field of the Invention

The disclosure relates to a method of displaying multiple pieces of information having priority.

### 2. Background of the Invention

As the digital environment in the information age continues to expand, large amounts of data are being generated, at an increased frequency, and with an increase variety.

Accordingly, the importance of creating meaningful information by processing and analyzing data has never been greater. In addition, a method of more efficiently providing the analyzed information to the user has been important.

The above information is presented as background information only to assist with an understanding of the present disclosure. No determination has been made, and no assertion is made, as to whether any of the above might be applicable as prior art with regard to the present disclosure.

### SUMMARY OF THE INVENTION

As data is processed and analyzed, data having priority may be determined. Typically, data having priority is simply arranged and displayed based on order of priority of information. If the information having priority is updated, the updated information may be arranged and displayed again based on order of priority. If information having priority is frequently updated, a user may have difficulty in recognizing the information as the displayed information is changed.

Aspects of the present disclosure are to address at least the above-mentioned problems and/or disadvantages and to provide at least the advantages described below. Accordingly, an aspect of the present disclosure is to provide an information displaying method capable of minimizing the change of information based on order of priority and enabling a user to intuitively recognize important information when displaying information having priority.

In accordance with an aspect of an embodiment, a display apparatus may include a communication interface configured to receive, from a first external electronic device, an information list including multiple pieces of information having priority; a display to display the multiple pieces of information; and a processor configured to divide the multiple pieces of information into a first group and a second group based on the priority, display first information included in the first group in a first region of the display, and display second information included in the second group in a second region of the display. The processor may be further configured to identify, in a group unit, third information remaining in a group, fourth information deleted from the group, and fifth information added to the group, when the information list is updated, display the third information remaining in the group on the display without position change, delete the fourth information deleted from the group from the display, and display the fifth information added to the group on the display.

In accordance with another aspect of an embodiment, an information displaying method of a display apparatus may include receiving, from a first external electronic device, an information list including multiple pieces of information having priority, dividing the multiple pieces of information into a first group and a second group based on the priority, displaying first information included in the first group in a first region of a display, displaying second information included in the second group in a second region of the display, identifying, in a group unit, third information remaining in a group, fourth information deleted from the group, and fifth information added to the group, when the information list is updated, displaying the third information remaining in the group on the display without position change, deleting the fourth information deleted from the group from the display, and displaying the fifth information added to the group on the display.

In accordance with another aspect of an embodiment, a computer-readable recording medium may store instructions which, when executed by a processor, cause the processor to perform operations of receiving, from a first external electronic device, an information list including multiple pieces of information having priority, dividing the multiple pieces of information into a first group and a second group based on the priority, displaying first information included in the first group in a first region of a display, displaying second information included in the second group in a second region of the display, identifying, in a group unit, third information remaining in a group, fourth information deleted from the group, and fifth information added to the group, when the information list is updated, displaying the third information remaining in the group on the display without position change, deleting the fourth information deleted from the group from the display, and displaying the fifth information added to the group on the display.

According to various embodiments of the present disclosure, when displaying information frequently subject to a change of priority, the user may not only intuitively recognize higher priority information, but also easily recognize information by minimizing the change in the position of information displayed on the display.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

. The above and other aspects, features, and advantages of certain embodiments of the present disclosure will be more apparent from the following description taken in conjunction with the accompanying drawings, in which:
FIG. 1 is a view illustrating elements of a display apparatus, according to an embodiment;
FIG. 2A illustrates displaying information on a display according to an embodiment;
FIG. 2B illustrates deleting a portion of information displayed on the display as an information list is updated according to an embodiment;
FIG. 2C illustrates displaying new information on a display, as an information list is updated according to an embodiment;
FIGS. 3A, 3B, and 3C illustrate displaying additional information on a display according to an embodiment;
FIG. 4 is a flowchart illustrating an information displaying method of a display apparatus, according to an embodiment; and
FIG. 5 is a flowchart illustrating an information displaying method of a display apparatus, according to an embodiment.

### DETAILED DESCRIPTION OF EMBODIMENTS OF THE PRESENT INVENTION

Hereinafter, various example embodiments of the present disclosure may be described with reference to accompanying drawings. Accordingly, those of ordinary skill in the art should understand that the present disclosure is not limited to a specific embodiment, but various modifications, equivalents, and/or alternatives of the embodiment of the present disclosure are included in the present disclosure. In the following description made with respect to the accompanying drawings, similar elements will be assigned with similar reference numerals.

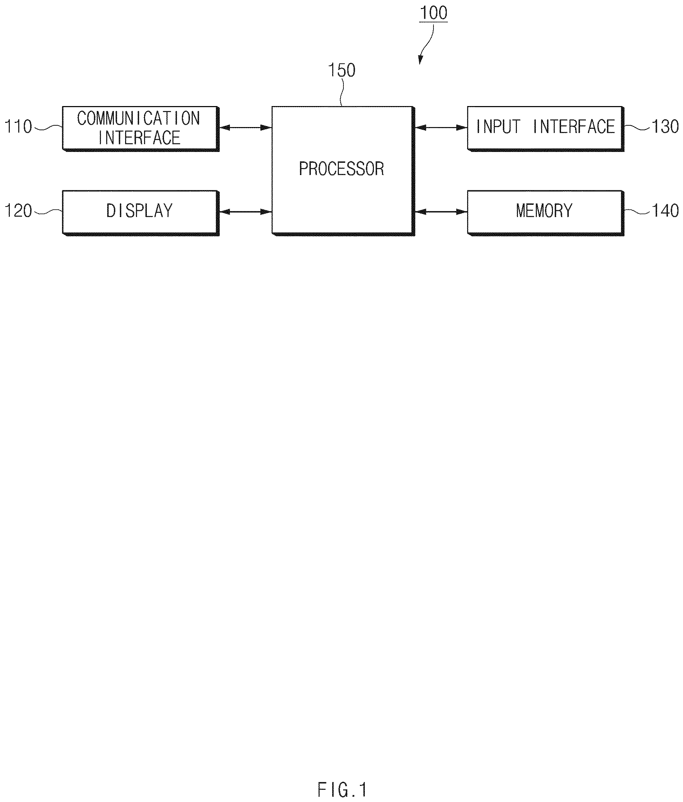

FIG. 1 is a view illustrating elements of a display apparatus, according to an embodiment.

Referring to FIG. 1, a display apparatus 100 may include a communication interface 110, a display 120, an input interface 130, a memory 140, and a processor 150. For example, the display apparatus 100 may include various devices, such as a TV, a smartphone, a tablet personal computer (PC), a notebook PC, a monitor, an electronic photo frame, and an electronic bulletin board, for displaying information.

According to an embodiment, the communication interface 110 may communicate with an external electronic device. For example, the communication interface 110 may communicate with a terminal device, such as a smartphone, a tablet PC, or the like, or a server to provide a service such as a social network service (SNS), information search, news providing, or the like. According to an embodiment, the communication interface 110 may communicate with the server through a mobile communication network or the Internet or may communicate with a terminal device through a short-range wireless communication network such as wireless-fidelity (Wi-Fi) or Bluetooth.

According to an embodiment, the communication interface 110 may receive an information (or data) list from the external electronic device. The information list may include, for example, multiple pieces of information having priority. For example, the communication interface 110 may receive search rank information from a search server, may receive broadcast program viewing rank information from a broadcast server, or may receive music source rank information from a content server. The multiple pieces of information may include, for example, at least one of a text, a hyperlink connected with a website, and an image.

According to an embodiment, the display 120 may display information based on the information list received through the communication interface 110. According to an embodiment, when the information list is updated, the display 120 may change a portion of information displayed on the display 120 based on the updated information list.

According to an embodiment, the input interface 130 may receive a user input. For example, the input interface 130 may receive a user input for selecting information displayed on the display 120. For another example, the input interface 130 may receive a user input for selecting information, which is to be displayed on the display 120, from the multiple pieces of information included in the information list.

According to an embodiment, the input interface 130 may include a touch sensor panel to sense the touch manipulation of a user or a pen sensor panel to sense the manipulation of a pen. According to an embodiment, the input interface 130 may include a button to sense the push of the user or rotation. According to an embodiment, the input interface 130 may include a Bluetooth module or an infrared receiver to receive an input signal resulting from user manipulation from a remote control device.

According to an embodiment, the memory 140 may store an information display application. The information display application may include an instruction, a user interface, or the like allowing the display apparatus 100 to display information received from the external electronic device according to various embodiments of the present disclosure.

According to an embodiment, the memory 140 may store the information list received through the communication interface 110. According to an embodiment, when information included in the information list is divided into a plurality of groups, the memory 140 may store information included in each group.

According to an embodiment, the processor 150 may control the overall operation of the display apparatus 100. For example, the processor 150 may individually control the communication interface 110, the display 120, the input interface 130, and the memory 140 to display information on the display 120 according to various embodiments of the present disclosure.

According to an embodiment, the display apparatus 100 may include at least one processor (e.g., a plurality of processors). According to an embodiment, the processor 150 may be implemented with a system on chip (SoC) that includes a central processing unit (CPU), a graphics processing unit (GPU), a memory, and the like.

According to an embodiment, the processor 150 may receive an information list including multiple pieces of information having priority from the external electronic device through the communication interface 110 and may display, on the display 120, at least a portion of the multiple pieces of information included in the information list. According to an embodiment, the processor 150 may request the information list from the external electronic device and may display, on the display 120, the information list received from the external electronic device according to the request, by using the information display application.

According to an embodiment, the processor 150 may display information included in the information list on the display 120 in response to the user input received through the input interface 130. For example, the user may control the operation of the display apparatus 100 by using the remote control device, the touch pane, the button, or the like. When the user input for displaying information through the input interface 130 is received, the processor 150 may display, on the display 120, information received from the external electronic device (e.g., a server) by using the information display application.

According to an embodiment, the processor 150 may display, on the display 120, information included in the information list according to a command received from the external electronic device through an application installed in the external electronic device (e.g., a smartphone). For example, the information display application installed in the display apparatus 100 may operate together with the information application installed in the external electronic device. The user may control the operation of the display apparatus 100 by using the application installed in the external electronic device. The processor 150 may display, on the display 120, information received from the external electronic device (e.g., the server) by using the information display application when a command for information display is received from the external electronic device.

According to an embodiment, the processor 150 may request an information list from a social network service (SNS) server. For example, the processor 150 may request an information list of hot keywords over an SNS from the SNS server, and may receive an information list including information on a plurality of hot keywords having priority from the SNS server according to the request. The hot keyword information may refer to keyword information searched frequently by the user or frequently registered as a tag.

According to an embodiment, the processor 150 may request an information list from a server corresponding to a language (or selected country) selected by the user, when requesting the information list. For example, when Korean is selected by the user, the processor 150 may request an information list from a Korean SNS server. When English is selected by the user, the processor 150 requests an information list from a US SNS server. According to an embodiment, the processor 150 may request an information list from a server corresponding to a language (e.g., Korean, English, or the like), which is currently set up in the display apparatus 100 or the information display application. For example, when a language set up in the display apparatus 100 or the information display application is Korean, the processor 150 may request an information list from a Korean SNS server. When the set-up language is English, the processor 150 may request an information list from an US SNS server.

According to an embodiment, the processor 150 may select a portion of multiple pieces of information included in the information list as information to be displayed on the display 120. For example, when a user input is received to select the category (e.g., sports, music, or the like) of information, the processor 150 may select information corresponding to the selected category from information included in the information list.

According to an embodiment, the processor 150 may divide multiple pieces of information (or information, which is selected by the user, of multiple pieces of information included in the information list) included in the information list into a plurality of groups based on priority of information. For example, the processor 150 may divide multiple pieces of information included in the information list into a first group and a second group. According to various embodiments of the present disclosure, although the processor 150 may divide multiple pieces of information into three or more groups, the following description will be made while focusing on the embodiment that multiple pieces of information is divided into two groups, for the explanation of convenience. Following Table 1 shows an example that multiple pieces of information having priority are divided into two groups based on order of priority.

**<Table 1>**

| Group | Information | Priority |
|---|---|---|
| Group 1 | INFORMATION 1 | 1 |
| | INFORMATION 2 | 2 |
| | INFORMATION 3 | 3 |
| Group 2 | INFORMATION 4 | 4 |
| | INFORMATION 5 | 5 |
| | INFORMATION 6 | 6 |
| | INFORMATION 7 | 7 |
| | INFORMATION 8 | 8 |
| | INFORMATION 9 | 9 |
| | INFORMATION 10 | 10 |
| | INFORMATION 11 | 11 |
| | INFORMATION 12 | 12 |

Referring to Table 1, the processor 150 may include three pieces of information (INFORMATION 1 to INFORMATION 3), which have higher priority among multiple pieces of information (INFORMATION 1 to INFORMATION 12) having priority, in a first group (group 1) and may include remaining nine pieces of information (INFORMATION 4 to INFORMATION 12) having lower priority in a second group (group 2). According to an embodiment, the processor 150 may store, in the memory 140, multiple pieces of information divided into a plurality of groups.

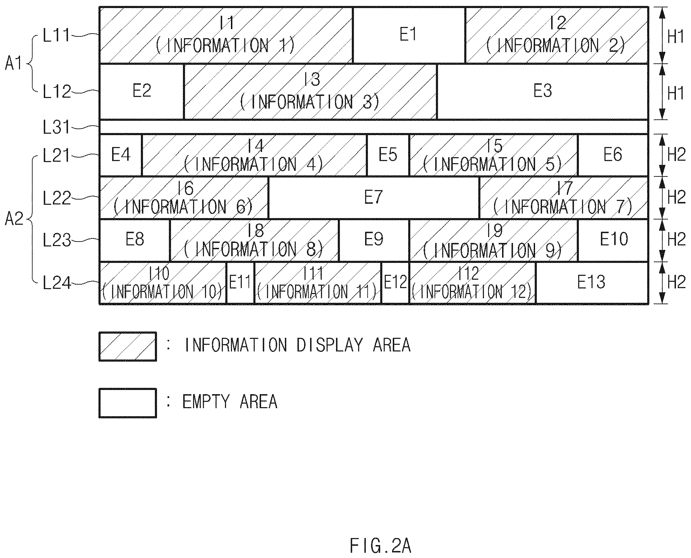

FIG. 2A illustrates displaying information on the display.

According to an embodiment, the processor 150 may divide the display 120 (or a display screen) into a plurality of regions and may display information included in each of a plurality of groups on a respective region of mutually different regions. For example, referring to FIG. 2A, the processor 150 may divide the display screen into a first region A1 and a second region A2. The processor 150 may display information, which is included in the first group, on the first region A1 and may display information, which is included in the second group, on the second region A2. According to an embodiment, the processor 150 may place a blank line L31 between the regions A1 and A2 to distinguish the regions A1 and A2 from each other.

According to an embodiment, the processor 150 may divide the first region A1 and the second region A2 into at least one line. For example, the processor 150 may divide the first region A1 into a first line L11 and a second line L12 and may divide the second region A2 into a first line L21 to a fourth line L24. The number of lines included in the first region A1 and the second region A2 may be determined depending on the number or the length of the information included in each of the first group and the second group.

According to an embodiment, the height of at least one of the lines L11 and L12 included in the first region A1 may be different from the height of at least one of lines L21, L22, L23, and L24 included in the second region A2. For example, at least one of the lines L11 and L12 included in the first region A1 may have a first height HI and at least one of lines L21, L22, L23, and L24 included in the second region A2 may have a second height H2 lower than the first height HI. According to an embodiment described above, information having a higher priority may be displayed in a larger size and thus the visibility of the information having the higher priority may be improved.

According to an embodiment, the processor 150 may place at least information display region and at least one blank region on each line. According to an embodiment, the processor 150 may alternately place an information display region and a blank region on the line. For example, the processor 150 may place a first information display region 11, a first blank region E1, and a second information display region I2 on the first line L11 included in the first region A1 and may place a second blank area E2, a third information display area 13, and a third blank area E3 on the second line L12 included in the first region A1. The processor 150 may place, on the first line L21 included in the second region A2, a fourth blank region E4, a fourth information display region I4, a fifth blank E5, a fifth information display region I5, and a sixth blank E6, may place, on the second line L22, a sixth information display region I6, a seventh blank region E7, and a seventh information display region 17, may place, on the third line L23, an eighth blank region E8, an eighth information display region I8, a ninth blank region E9, a ninth information display region I9, and a tenth empty region E10, and may place, on the fourth line L24, a tenth information display region 110, an eleventh blank region E11, an eleventh information display region I11, a twelfth blank region E12, a twelfth information display region 112, and a thirteenth blank region E13.

According to an embodiment, the processor 150 may determine the width of the information display region, based on the length of information to be displayed on the information display region. For example, as the length of the information to be displayed on the information display region is increased, the width of the information display region may be determined to be increased. According to an embodiment, the processor 150 may randomly determine the width of the blank region. For example, the blank region may have a random width equal to or greater than a specified width.

According to an embodiment, the processor 150 may alternately place the information display region and the blank region at the first region of each line in a line unit. For example, the processor 150 may place the first information display region I1 at the first region of the first line L11 of the first region A1 and may place the second blank region E2 at the first region of the second line L12. For another example, the processor 150 may place the fourth blank region E4 at the first region of the first line L21 of the second region A2 and may place sixth information display region I6 at the first region of the second line L22. According to the embodiment described above, as the information display region and the blank region are alternately placed at the first regions of the lines, the visibility of information may be improved.

According to an embodiment, the processor 150 may express the information display regions 11 to 13 included in the first region A1 in the first color (e.g., a yellow color) and may express the information display regions (I4 to 112) included in the second region A2 in the second color (e.g., a white color).

According to an embodiment, the processor 150 may display information on the information display region. According to an embodiment, each information display region may include only one piece of information. For example, the first information (INFORMATION 1) to the twelfth information (INFORMATION 12) may be displayed on the first information display region 11 to the twelfth information display region 112, respectively. According to an embodiment described above, multiple pieces of information included in respective information display regions are separated from each other by the blank region, thereby improving the visibility of the information.

According to an embodiment, the processor 150 may express three pieces of information (INFORMATION 1 to INFORMATION 3), which are included in the first group, in the first color (e.g., a blue color) and may express nine pieces of information (INFORMATION 4 to INFORMATION 12), which are included in the second group, in the second color (e.g., a white color). According to an embodiment, the processor 150 may express information (e.g., the first information (INFORMATION 1)) having the highest priority in the first color (e.g., a red color) and may express another piece of information in the second color (e.g., a white color). For example, the first color may be a color representing visibility higher than the visibility of the second color, based on the color of the information display region. Accordingly, the visibility of information having a higher priority may be more improved.

According to an embodiment, the processor 150 may update an information list. For example, when a new information list is received from the external electronic device, the processor 150 may update the information list by using the new information list.

According to an embodiment, the processor 150 may divide multiple pieces of information (or information, which is selected by the user, of multiple pieces of information included in the information list) included in the updated information list into a plurality of groups, based on the priority of information, when the information list is updated. For example, the processor 150 may divide multiple pieces of information included in the updated information list into a first group and a second group. Following Table 2 shows an example of how multiple pieces of information included in the updated information list may be divided into two groups based on order of priority.

**<Table 2>**

| Group | Information | Priority |
|---|---|---|
| Group 1 | INFORMATION 1 | 1 |
| | INFORMATION 4 | 2 |
| | INFORMATION 2 | 3 |
| Group 2 | INFORMATION 5 | 4 |
| | INFORMATION 6 | 5 |
| | INFORMATION 3 | 6 |
| | INFORMATION 7 | 7 |
| | INFORMATION 9 | 8 |
| | INFORMATION 8 | 9 |
| | INFORMATION 13 | 10 |
| | INFORMATION 14 | 11 |
| | INFORMATION 12 | 12 |

Referring to Table 2, the processor 150 may include three pieces of information (INFORMATION 1, INFORMATION 2, and INFORMATION 4), which have relatively higher priority among multiple pieces of information (INFORMATION 1 to INFORMATION 12) having priority, in a first group (group 1) and may include remaining nine pieces information (INFORMATION 3, INFORMATION 5 to INFORMATION 9, and INFORMATION 12 to INFORMATION 14) having lower priority in a second group (group 2). According to an embodiment, the processor 150 may store, in the memory 140, multiple pieces of information divided into a plurality of groups.

According to an embodiment, the processor 150 may compare previous information with updated information in a group unit and may identify information remaining in the group, information deleted from the group, and information added to the group. For example, the processor 150 may determine remaining information included in both of the previous information and the updated information as information remaining in the group, may determine information included only in the previous information as information deleted from the group, and may determine information only in the updated information as information added to the group. Table 3 shows that previous information and updated information included in the first group (group 1) and the second group (group 2), respectively.

**<Table 3>**

| Group | Previous Information | Updated Information | Priority |
|---|---|---|---|
| Group 1 | INFORMATION 1 | INFORMATION 1 | 1 |
| | INFORMATION 2 | INFORMATION 4 | 2 |
| | INFORMATION 3 | INFORMATION 2 | 3 |
| Group 2 | INFORMATION 4 | INFORMATION 5 | 4 |
| | INFORMATION 5 | INFORMATION 6 | 5 |
| | INFORMATION 6 | INFORMATION 3 | 6 |
| | INFORMATION 7 | INFORMATION 7 | 7 |
| | INFORMATION 8 | INFORMATION 9 | 8 |
| | INFORMATION 9 | INFORMATION 8 | 9 |
| | INFORMATION 10 | INFORMATION 13 | 10 |
| | INFORMATION 11 | INFORMATION 14 | 11 |
| | INFORMATION 12 | INFORMATION 12 | 12 |

Referring to Table 3, regarding the first group (group 1), the processor 150 may determine the first information (INFORMATION 1) and the second information (INFORMATION 2) commonly included in both of the previous information and the updated information as information remaining in the first group, may determine the third information (INFORMATION 3) included only in the previous information as information deleted from the first group, and may determine the fourth information (INFORMATION 4) included only in the updated information as information added to the first group. Regarding the second group (group 2), the processor 150 may determine the fifth information (INFORMATION 5) to the ninth information (INFORMATION 9) and the twelfth information (INFORMATION 12) commonly included in both of the previous information and the updated information as information remaining in the second group, may determine the fourth information (INFORMATION 4), the tenth information (INFORMATION 10), and the eleventh information (INFORMATION 11) included only in the previous information as information deleted from the second group, and may determine the third information (INFORMATION 3), the thirteenth information (INFORMATION 13), and the fourteenth information (INFORMATION 14) included only in the updated information as information added to the second group.

According to an embodiment, the information remaining in the group may include information having the same priority in the previous information and the updated information, and information having different priority in the previous information and the updated information. For example, regarding to the first group, the first information (INFORMATION 1) may be information having the same priority in the previous information and the updated information and the second information (INFORMATION 2) may be information having a different priority in the previous information and the updated information. For another example, regarding to second group, the seventh information (INFORMATION 7) and the twelfth information (INFORMATION 12) may be information having the same priority in the previous information and the updated information and the fifth information (INFORMATION 5), the sixth information (INFORMATION 6), the eighth information (INFORMATION 8), and the ninth information (INFORMATION 9) may be information having different priority in the previous information and the updated information.

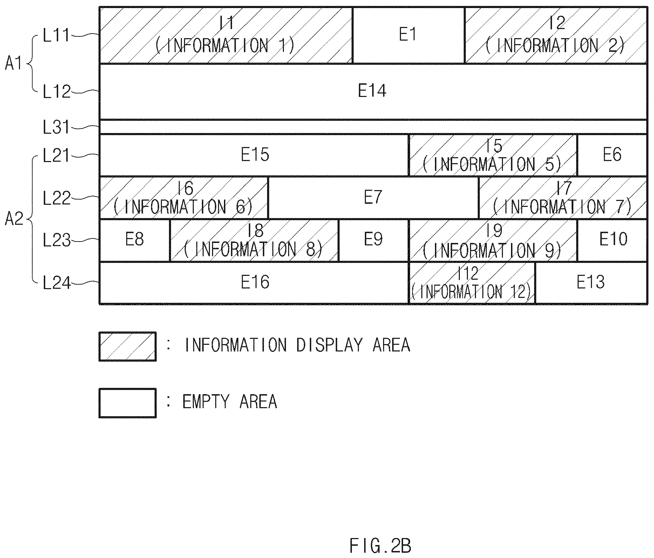

FIG. 2B illustrates deleting a portion of information displayed on the display as an information list is updated.

According to an embodiment, the processor 150 may delete information, which is deleted from groups, in information displayed on the display 120 from the display 120. According to an embodiment, the processor 150 may delete the information, which is deleted from the groups, from the display 120 without changing the positions of remaining pieces of information in the groups. For example, the processor 150 may fixedly display the remaining pieces of information in the groups at original positions without changing the positions of multiple pieces of information displayed on the display 120 based on changed order of priority even if order of priority of the remaining pieces of information in the groups is changed as the information list is updated.

Referring to FIGS. 2A and 2B, the processor 150 may delete the third information (INFORMATION 3) from the second line L12 of the first region A1 and integrate the third information display region 13, on which the third information (INFORMATION 3) has been displayed, with the second blank region E2 and the third blank region E3 adjacent to the third information display region 13, thereby creating the fourteenth blank region E14. The processor 150 may delete the fourth information (INFORMATION 4) from the first line L21 of the second region A2 and integrate the fourth information display region I4, on which the fourth information (INFORMATION 4) has been displayed, with the fourth blank region E4 and the fifth blank region E5 adjacent to the fourth information display region I4, thereby creating the fifteenth blank region E15. The processor 150 may delete the tenth information (INFORMATION 10) and the eleventh information (INFORMATION 11) from the fourth line L24 of the second region A2, and may integrate the tenth information display region 110 and the eleventh information display region I11, on which the tenth information (INFORMATION 10) and the eleventh information (INFORMATION 11) have been displayed, with the eleventh blank region E11 and the twelfth blank region E12 adjacent to the tenth information display region 110 and the eleventh information display region I11, thereby creating a sixteenth blank region E16.

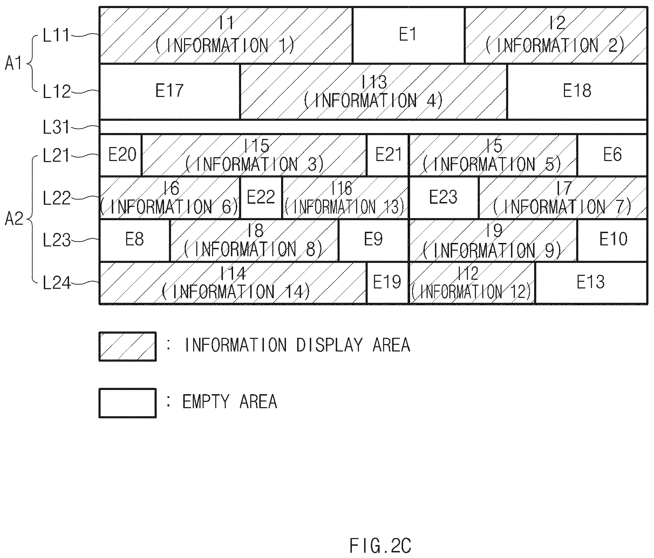

FIG. 2C illustrates displaying new information on a display, as an information list is updated.

According to an embodiment, the processor 150 may display, on the display 120, information, which is added to the group, in information displayed on the display 120. According to an embodiment, the processor 150 may display the information added to the group without changing the positions of remaining pieces of information in the group. For example, the processor 150 may fixedly display the remaining pieces of information in the group at original positions without changing the positions of multiple pieces of information displayed on the display 120 based on changed order of priority even if order of priority of the remaining pieces of information in the group is changed as the information list is updated.

According to an embodiment, the processor 150 may determine the length of information when displaying new information on the display 120. The processor 150 may calculate a width necessary for displaying information based on the determined length. The processor 150 may search for the blank region having a width equal to or greater than the calculated width, may transform a portion of the searched blank region into an information display region, and may display information on the transformed information display region.

According to an embodiment, when multiple pieces of information is added to the group, the processor 150 may sequentially determine regions, in which information is to be displayed, depending on the lengths of the multiple pieces of information. For example, when the fourteenth information (INFORMATION 14), the third information (INFORMATION 3), and the thirteenth information (INFORMATION 13) have lengths in descending order of the fourteenth information (INFORMATION 14), the third information (INFORMATION 3), and the thirteenth information (INFORMATION 13), the processor 150 may determine a region, on which the fourteenth information (INFORMATION 14) is to be displayed, may determine a region, on which the third information (INFORMATION 3) is to be displayed, and then may determine a region on which the thirteenth information (INFORMATION 13) is to be displayed.

According to an embodiment, the processor 150 may express information (or information added to the group), which is newly displayed on the display 120, in the first color (e.g., a red color) and may express previous information (or remaining information in the group), which is displayed on the display 120, in the second color (e.g., a white color). According to an embodiment described above, the visibility of information newly displayed on the display 120 may be improved and thus a user may easily recognize the newly displayed information.

Referring to FIGS. 2B and 2C, the processor 150 may determine the fourteenth blank region E14 as a region on which the fourth information (INFORMATION 4) is to be displayed, based on the length of the fourth information (INFORMATION 4) to be inserted into the first region A1. The processor 150 may divide the fourteenth blank region E14 into the seventeenth blank region E17, the thirteenth information display region 113, and the eighteenth blank region E18, and may display the fourth information (INFORMATION 4) on the thirteenth information display region 113. The processor 150 may determine the sixteenth blank region E16 as a region on which the fourteenth information (INFORMATION 14) is to be displayed, based on the length of the fourteenth information (INFORMATION 14) to be inserted into the second region A2. The processor 150 may divide the sixteenth blank region E16 into the fourteenth display region 114 and the nineteenth blank region E19 and may display the fourteenth information (INFORMATION 14) on the fourteenth information display region 114. The processor 150 may determine the fifteenth blank region E15 as a region on which the third information (INFORMATION 3) is to be displayed, based on the length of the third information (INFORMATION 3) to be inserted into the second region A2. The processor 150 may divide the fifteenth blank region E15 into the twentieth blank region E20, the fifteenth information display region 115, and a twenty-first blank region E21, and may display the third information (INFORMATION 3) on the fifteenth information display region 115. The processor 150 may determine the seventh blank region E7 as a region on which the thirteenth information (INFORMATION 13) is to be displayed, based on the length of the thirteenth information (INFORMATION 13) to be inserted into the second region A2. The processor 150 may display the seventh blank region E7 into a twenty-second blank region E22, the sixteenth information display region 116 and a twenty-third blank region E23 and may display the thirteenth information (INFORMATION 13) on the sixteenth information display region 116.

According to an embodiment described with reference to FIGS. 2A to 2C, the display apparatus 100 may display multiple pieces of information having priority on the display 120 by dividing the multiple pieces of information having priority into a plurality of groups based on order of priority and may fix the display position of information included in the same group even if the order of priority is changed as the information is updated. Accordingly, when information having priority frequently changed is displayed on the display 120, the user may not only intuitively recognize information having higher priority, but also easily recognize information by minimizing the change in the position of information displayed on the display.

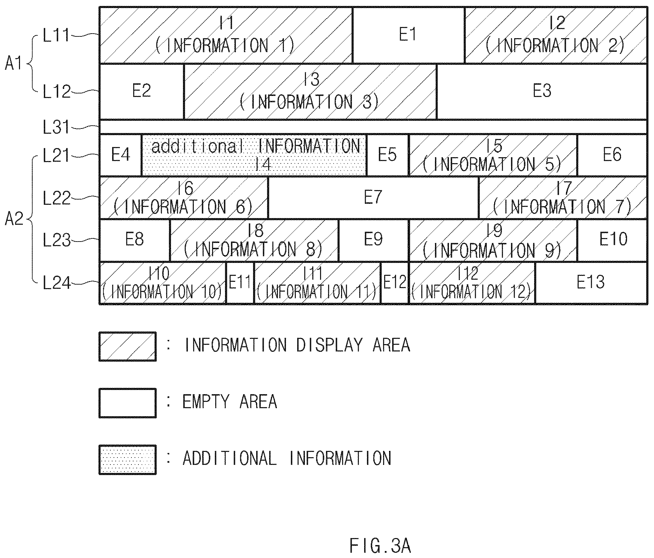

FIGS. 3A to 3C illustrate the display of additional information on a display.

According to an embodiment, the processor 150 may display, on the display 120, additional information associated with information displayed on the display 120. For example, the processor 150 may sequentially display additional information with respect to multiple pieces of information displayed on the display 120. For another example, when a user input is received for information displayed on the display 120, the processor 150 may display additional information associated with the information for which the user input is received.

According to an embodiment, the processor may receive additional information, which is associated with information displayed on the display 120, from the external electronic device through the communication interface 110. The processor 150 may request additional information from the external electronic device and may receive the additional information from the external electronic device according to the request. For example, the processor 150 may transmit information (or a text associated with information) displayed on the display 120 to the search server while serving as a search keyword and may receive a search result from the search server. The additional information may include, for example, at least one of a text, a hyperlink connected with a website, and an image.

According to an embodiment, the processor 150 may overlap the additional information with the information display region including information associated with the additional information. Referring to FIG. 3A, the processor 150 may overlap the additional information with the fourth information display region I4 including the fourth information when displaying additional information associated with the fourth information.

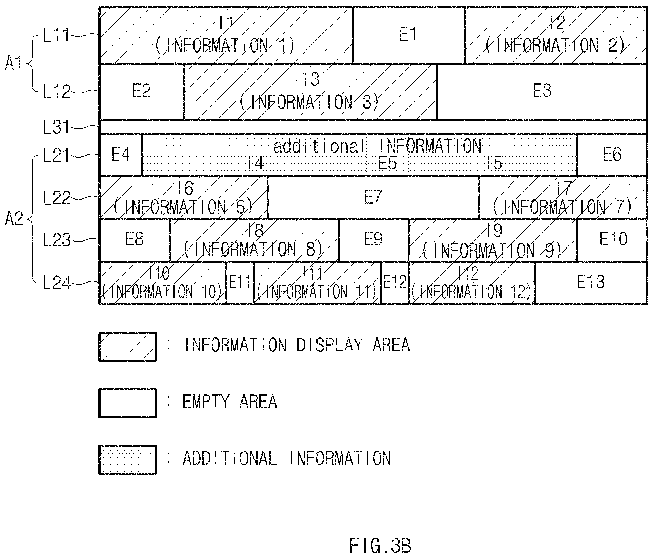

According to an embodiment, the processor 150 may overlap the additional information with at least a partial region of a line including information associated with the additional information. Referring to FIG. 3B, the processor 150 may overlap the additional information with the first line L21 of the second region A2 including the fourth information when displaying additional information associated with the fourth information. For example, the processor 150 may overlap the additional information with the fourth information display region I4, the fifth blank region E5, and the fifth information display region I5 included in the first line L21. The region on which the additional information is displayed may be expanded to a region including at least one of the fourth blank region E4 and the sixth blank region E6 included in the first line L21 or may be a region except for a partial region of the fifth blank region E5 and the fifth information display region I5.

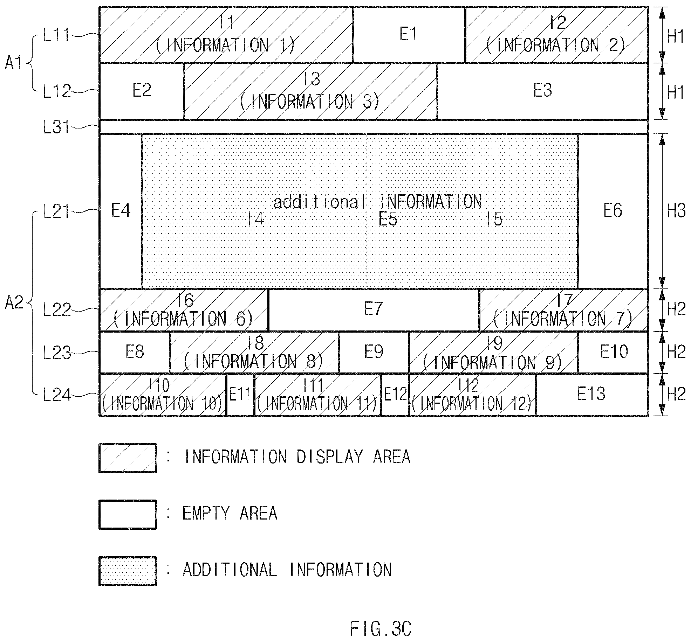

According to an embodiment, the processor 150 may increase the height of a line including information associated with the additional information when displaying the additional information. Referring to FIG. 3C, the processor 150 may extend the height of the first line L21 of the second region A2 including the fourth information from the second height H2 to a third height H3, when displaying the additional information associated with the fourth information. For example, the processor 150 may overlap the additional information with the fourth information display region I4, the fifth blank region E5, and the fifth information display region I5 included in the first line L21.

According to an embodiment described with reference to FIGS. 3A to 3C, the display apparatus 100 may provide various pieces of information for a user while maintaining the display form of the information displayed on the display 120.

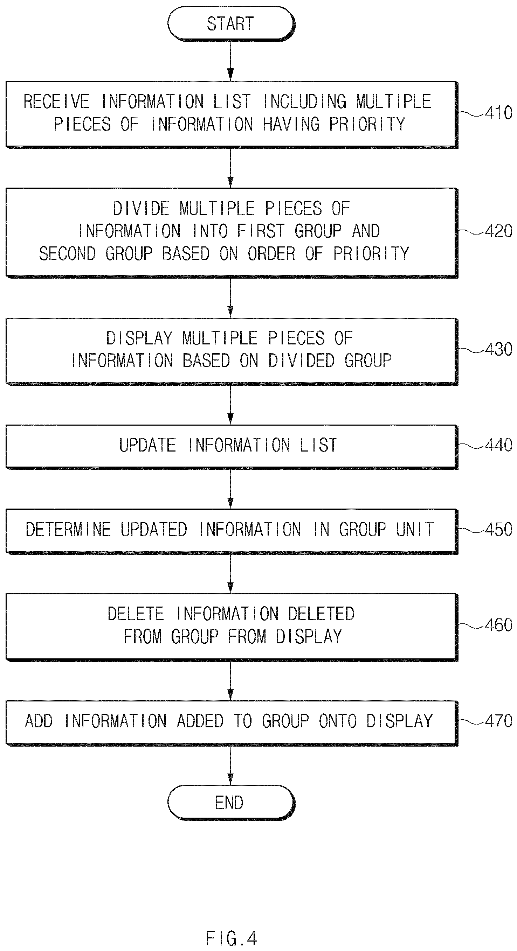

FIG. 4 is a flowchart illustrating an information displaying method of a display apparatus, according to an embodiment.

The flowchart illustrated in FIG. 4 may include operations processed in the display apparatus 100 described above. Accordingly, even if the details of the display apparatus 100 are omitted in the following description, the description of the display apparatus 100 made with reference to FIGS. 1 to 3C will be applied to the flowchart of FIG. 4.

According to an embodiment, the display apparatus 100 may receive an information list including multiple pieces of information having priority in operation 410. For example, the display apparatus 100 may request an information list from the external electronic device and may receive the information list from the external electronic device according to the request.

According to an embodiment, the display apparatus 100 may divide the multiple pieces of information into the first group and the second group based on the order of priority of information, in operation 420. According to an embodiment, the display apparatus 100 may select a portion of the multiple pieces of information included in the information list as information to be displayed on the display. When a portion of the multiple pieces of information included in the information list is selected, the display apparatus 100 may divide the selected information into the first group and the second group.

According to an embodiment, the display apparatus 100 may display the multiple pieces of information on the display, based on the divided group, in operation 430. According to an embodiment, the processor 150 may divide a display screen into the first region and the second region, may display the information included in the first group on the first region, and may display information included in the second group on the second region.

According to an embodiment, the display apparatus 100 may divide each of the first region and the second region into at least one line. According to an embodiment, at least one line included in the first region and at least one line included in the second region may have mutually different heights.

According to an embodiment, the display apparatus 100 may alternately place at least one information display region and at least one blank region on each line. According to an embodiment, the display apparatus 100 may determine the width of the information display region, based on the length of information to be displayed on the information display region. According to an embodiment, the display apparatus 100 may randomly determine the width of the blank region. According to an embodiment, the display apparatus 100 may alternately place the information display region and the blank region at the first region of each line in a line unit.

According to an embodiment, the display apparatus 100 may update an information list in operation 440. For example, when a new information list is received from the external electronic device, the display apparatus 100 may update the information list by using the new information list.

According to an embodiment, the display apparatus 100 may determine updated information in a group unit in operation 450. For example, when the information list is updated, the display apparatus 100 may divide the multiple pieces of information included in the updated information list into the first group and the second group, based on the order of priority of the information. According to an embodiment, the display apparatus 100 may compare previous information with updated information in a group unit and may identify information remaining in the group, information deleted from the group, and information added to the group.

According to an embodiment, the display apparatus 100 may delete the information, which has been deleted from the group, from the display in operation 460. According to an embodiment, the display apparatus 100 may delete the information, which has been deleted from the group, from the display 120 without changing positions of remaining pieces of information in the group.

According to an embodiment, the display apparatus 100 may display the information added to the group on the display, in operation 470. According to an embodiment, the display apparatus 100 may display the information added in the group on the display without changing the positions of remaining pieces of information in the group. According to an embodiment described with reference to FIG. 4, although description has been made in that operation 470 is performed after operation 460, operation 470 and operation 460 may be simultaneously performed.

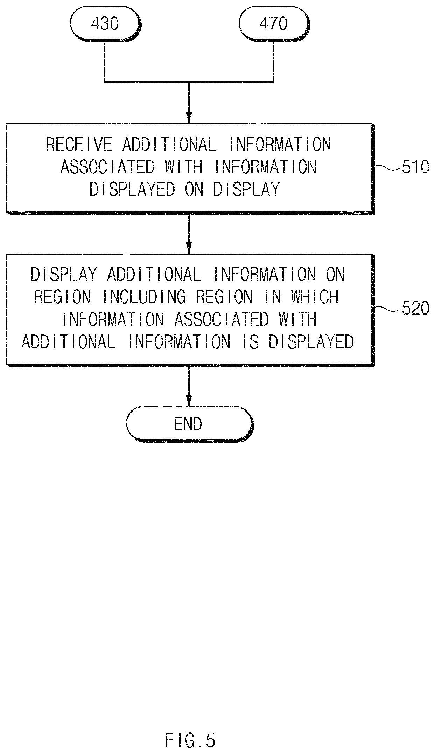

FIG. 5 is a flowchart illustrating an information displaying method of a display apparatus, according to an embodiment.

The flowchart illustrated in FIG. 5 may include operations processed in the display apparatus 100 described above, and the operations may be performed after operation 430 or 470 of FIG. 4. Accordingly, even if the details of the display apparatus 100 are omitted in the following description, the description of the display apparatus 100 made with reference to FIGS. 1 to 3C will be applied to the flowchart of FIG. 5.

According to an embodiment, the display apparatus 100 may receive additional information associated with information displayed on the display, in operation 510. For example, the display apparatus 100 may transmit information (or a text associated with information) displayed on the display to the search server while serving as a search keyword and may receive a search result from the search server.

According to an embodiment, the display apparatus 100 may display additional information on a region including a region on which the information associated with the additional information is displayed, in operation 520. According to an embodiment, the display apparatus 100 may overlap the additional information with the information display region including information associated with the additional information. For another example, the display apparatus 100 may overlap additional information with at least a partial region of the line including the information associated with the additional information. According to an embodiment, when displaying the additional information, the display apparatus 100 may increase the height of a line including information associated with additional information and may overlap the additional information with the expanded region.

At least a part of an apparatus (e.g., modules or functions thereof) or a method (e.g., operations) according to various embodiments may be, for example, implemented by instructions stored in a computer-readable storage media in the form of a program module. The instructions, when executed by a processor, may cause the processor to perform a function corresponding to the instructions. A computer-readable recording medium may include a hard disk, a floppy disk, a magnetic media (e.g., a magnetic tape), an optical media (e.g., a compact disc read-only memory (CD-ROM) and a digital versatile disc (DVD), a magneto-optical media (e.g., a floptical disk)), and an embedded memory. Also, the one or more instructions may contain a code made by a compiler or a code executable by an interpreter

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A display apparatus comprising:
a communication interface configured to receive, from a first external electronic device, an information list including multiple pieces of information having priority;
a display configured to display the multiple pieces of information; and
a processor configured to divide the multiple pieces of information into a first group and a second group based on the priority, display first information included in the first group in a first region of the display, and display second information included in the second group in a second region of the display,
wherein the processor is further configured to:
identify, in a group unit, third information remaining in a group, fourth information deleted from the group, and fifth information added to the group, when the information list is updated;
display the third information remaining in the group on the display without a position change;
delete the fourth information deleted from the group from the display; and
display the fifth information added to the group on the display.

2. The display apparatus of claim 1, wherein the processor is configured to:
divide the multiple pieces of information included in an updated information list into the first group and the second group, when the information list is updated; and
identify, in the group unit, the third information remaining in the group, the fourth information deleted from the group, and the fifth information added to the group by comparing previous information with updated information.

3. The display apparatus of claim 1 or 2, wherein each of the first region and the second region includes at least one line, and
wherein the at least one line included in the first region has a first height different from a second height of the at least one line included in the second region.

4. The display apparatus of any one of claims 1 to 3, wherein the processor is configured to:
display the first information, which is included in the first group, in a first color; and
display the second information, which is included in the second group, in a second color.

5. The display apparatus of any one of claims 1 to 4, wherein the processor is configured to:
divide each of the first region and the second region into at least one line;
alternately place at least one information display region and at least one blank region on the at least one line; and
display information on the at least one information display region.

6. The display apparatus of claim 5, wherein the at least one information display region includes only one piece of information.

7. The display apparatus of claim 5 or 6, wherein the processor is configured to:
place the at least one blank region in the first region of a second line when the first region of a first line is the at least one information display region; and
place the at least one information display region at the first region of the second line when the first region of the first line is the at least one blank region.

8. The display apparatus of any one of claims 5 to 7, wherein the processor is configured to:
determine a first width of the at least one information display region, based on a length of information to be displayed in the at least one information display region; and
randomly determine a second width of the blank region.

9. The display apparatus of any one of claims 5 to 8, wherein the at least one information display region included in the first region has a first color different from a second color of the at least one information display region included in the second region.

10. The display apparatus of any one of claims 5 to 9, wherein the processor is configured to:
receive, from a second external electronic device, additional information associated with sixth information displayed on the display; and
display the additional information in a region in which the sixth information is displayed.

11. The display apparatus of claim 10, wherein the processor is configured to:
overlap the additional information with the at least one information display region including the sixth information.

12. The display apparatus of claim 10 or 11, wherein the processor is configured to:
overlap the additional information with a line including the sixth information.

13. The display apparatus of claim 12, wherein the processor is configured to:
extend a height of the line including the sixth information when displaying the additional information.

14. An information displaying method of a display apparatus, the information displaying method comprising:
receiving, from a first external electronic device, an information list including multiple pieces of information having priority;
dividing the multiple pieces of information into a first group and a second group based on the priority;
displaying first information included in the first group in a first region of a display;
displaying second information included in the second group in a second region of the display;
identifying, in a group unit, third information remaining in a group, fourth information deleted from the group, and fifth information added to the group, when the information list is updated;
displaying the third information remaining in the group on the display without position change;
deleting the fourth information deleted from the group from the display; and
displaying the fifth information added to the group on the display.

15. The information displaying method of claim 14, wherein the identifying of the third information remaining in the group, the fourth information deleted from the group, and the fifth information added to the group in the group unit includes:
dividing the multiple pieces of information included in an updated information list into the first group and the second group, when the information list is updated; and
comparing previous information with updated information in the group unit.
